# EUROPEAN PATENT APPLICATION

(11) **EP 1 526 705 A1**
(43) Date of publication of application: **27.04.2005**
(21) Application number: 03292615.6
(22) Date of filing: 21.10.2003
(51) Int. Cl.: H04M 3/533, H04Q 3/00

(54) **Method of providing a mediated communication service**

(71) Applicant: Hewlett-Packard Development Company, L.P., Houston, Texas 77070 (US)
(72) Inventor: Brandt, Marc, 38320 Eybens (FR)
(74) Representative: Lloyd, Richard Graham

(57) **Abstract**

A method of providing a mediated communication service comprising the steps of
receiving an incoming call from a calling party (41), the incoming call comprising a destination identifier,
establishing a call session corresponing to the incoming call,
establishing an outgoing call to a called party (43) in accordance with the destination identifier, the outgoing call being associated with the call session, and
associating media resources comprising a recorder (47,49) and a player (48,50) with the call session, the recorder (47,49) being operable to store a voice stream from one of the incoming call and the outgoing call in a media store (17a) and the player (48,50) being operable to read the media store (17a) and generate a voice stream which is passed to the other of the incoming call and the outgoing call.

## Description

### Field of the Invention

This invention relates to a method of providing a mediated communication service, in particular for a telecommunication platform, and a service application operable to perform the method.

### Background of the Invention

Telecommunication providers provide many services in addition to simple voice communication, such as recording of calls. Recording telephone calls has many uses, from simple voicemail services to monitoring and archiving conversations. This would be advantageous for organisations such as financial or legal organisations where it is known and desirable to record calls. Other uses may be made of recorded calls, for example indexing or summarising. A record of a conference call would be of use in, for example, preparing minutes of the conference.

At present however, such services are provided by different and often application-specific systems, and only provide access to records of a call after the call has ended.

An aim of the present invention is to provide a new or improved method of providing a mediated communication service.

### Summary of the Invention

According to a first aspect of the invention we provide a method of providing a mediated communication service comprising the steps of receiving an incoming call from a calling party, the incoming call comprising a destination identifier, establishing a call session corresponding to the incoming call, establishing an outgoing call to a called party in accordance with the destination identifier, the outgoing call being associated with the call session, and associating media resources comprising a recorder and a player with the call session, the recorder being operable to store a voice stream from one of the incoming call and the outgoing call in a media store and the player being operable to read the media store and generate a voice stream which is passed to the other of the incoming call and the outgoing call.

The method may comprise passing a voice stream from one of the outgoing call and the incoming call to an interconnect to pass the voice stream to the other of the outgoing call and the incoming call.

The method may comprise receiving one or more of a voice stream from the player and the voice stream from the interconnect and selecting one of the voice streams to pass to the other of the outgoing call and the incoming call.

The method may comprise generating an audio message and passing it to one of the outgoing call and the incoming call.

The method may comprise receiving a control instruction from one of the called party and the calling party to modify operation of at least one of the media resources associated with the call session.

The control instruction from the one of the called party and the calling party may be to perform one of the following actions; receive a voice stream from the player; receive a voice stream from the other call; modify the voice stream received from the player; start or stop operation of the recorder; modify the voice stream recorded by the recorder; send an audio message to the other party.

The method may comprise associating media resources comprising a player and a recorder with each call of a call session, the media resources associated with each call being controllable by the party associated with the call.

According to a second aspect of the invention, we provide a method of providing a media service comprising a voice mail service, the service comprising the steps of receiving an incoming call from a calling party, the incoming call comprising a destination identifier, establishing a call session corresponding to the incoming call, establishing an outgoing call to a called party in accordance with the destination identifier, the outgoing call being associated with the call session, and associating a media resource comprising a recorder with the call session, the recorder being operable to store a voice stream from the incoming call in a media store, the method further comprising the step of passing an audio message to said outgoing call notifying the called party that a message is being recorded.

The method may comprise the step of associating a further media resource with the call session, the further media resource comprising a player, whereby the player may read the media store and generate a voice stream which is passed to the outgoing call.

The outgoing call may be operable to receive a voice stream from the incoming call from the player.

The method may comprise the step of receiving an instruction from the call party to perform one of the following actions, receive a voice stream from the further media resource, receive a voice stream from the incoming call, establish a connection between the incoming call and the outgoing call.

The method may comprise the step of connecting the incoming call to the outgoing call in response to an instruction from the called party.

The method may comprise the step of generating a control message comprising an audio message and passing the message to the outgoing call and receiving the instructions in response to said message.

According to a third aspect of the invention, we provide a service application for a telecommunication service platform, the service application being operable to perform a method according to the first aspect of the invention or the second aspect of the invention.

### Brief Description of the Drawings

An embodiment of the present invention will now be described by way of example only with reference to the accompanying drawings, wherein
Figure 1 is a diagrammatic illustration of a telecommunication service platform of known type,
Figure 2 is a diagrammatic illustration of a call session,
Figure 3 is a diagrammatic illustration of a method according to the present invention, and

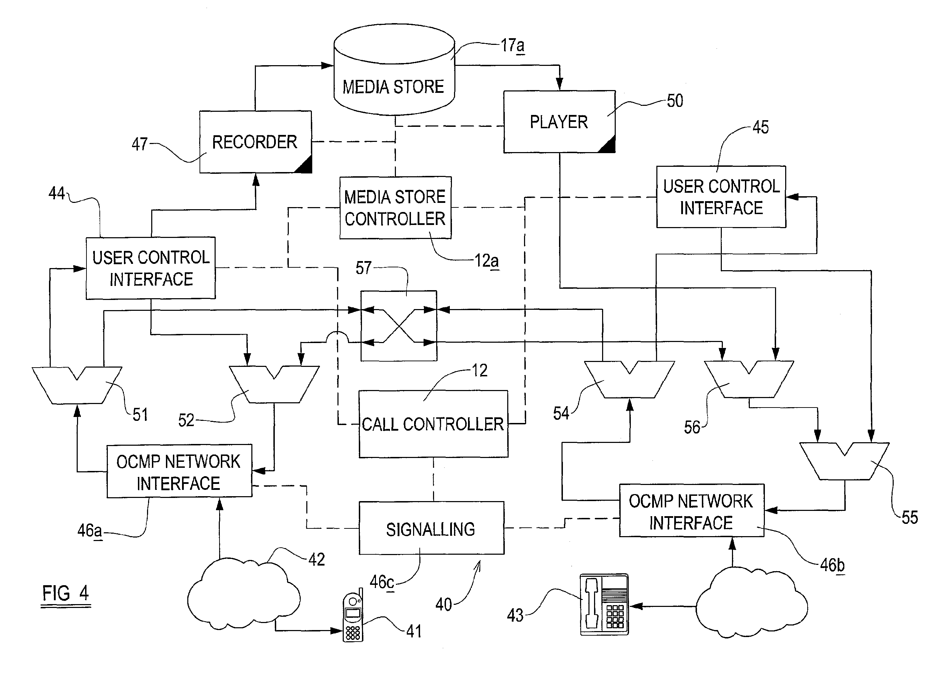

Figure 4 is a diagrammatic illustration of a method of providing a voice mail service.

### Detailed Description of the Preferred Embodiments

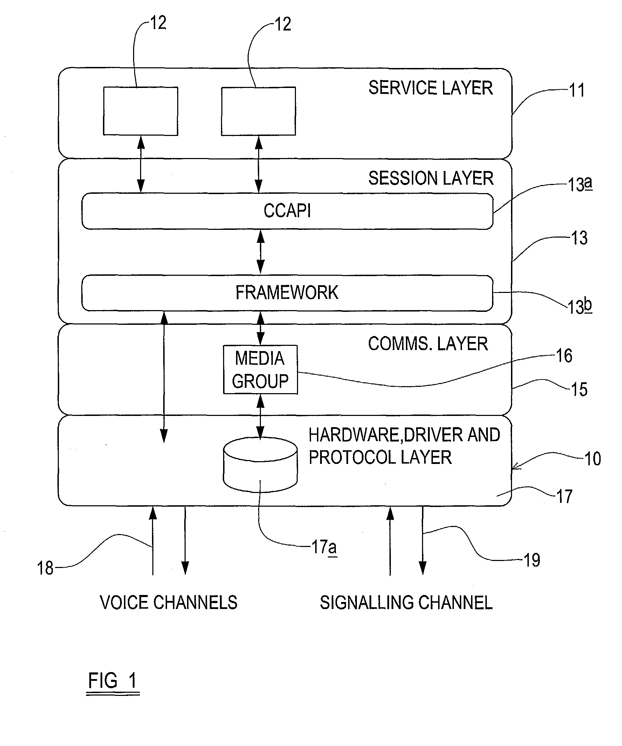

An appropriate computer system for providing a plurality of services, hereinafter referred to as a telecommunication service platform, of known type, is shown in Figure 1. The telecommunication service platform 10 is illustrated as having a number of functional layers. Starting at the top, at Figure 11, a service layer is shown. This generally includes all the programs or service applications 12 which provide services on the platform 10. The service layer is supported by the session layer 13, which includes the call control and media application programming interface "API" preferably in the form of an open application programming interface 13a which provides a set of functions which may be called or invoked by one of the service applications 12 in a way which is independent of the underlying network protocol and hardware. A platform framework shown at 13b performs the necessary scheduling resource of the session management function under the interface 13a.

Below the session layer 13 is the communications layer 15. The communications layer 15 gives access to the different network and system resources needed to provide the requested service for a call. Amongst other functions, this layer provides a media group provider 16 which is operable to provide access to the various media resources for the services 12.

The bottom layer 17 encompasses the hardware on which the platform runs, and the control software, middleware and protocol stacks, which have been omitted from this diagram for clarity. Connected to the bottom layer 17 are the voice channels 18 and signalling channels 19.

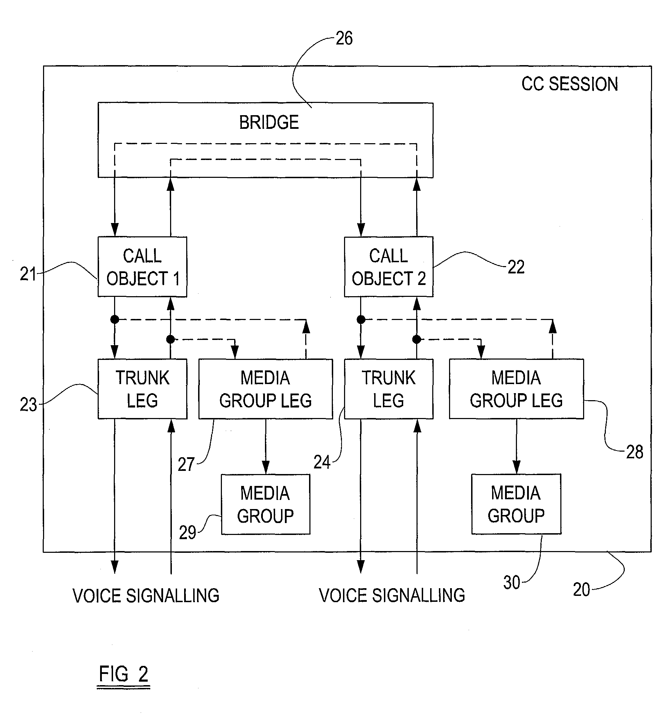

Referring now to Figure 2, a call session 20 associated with an application 12 is illustrated. When an incoming call is received by the platform 10, the call is routed to a service application 12 which establishes a call session 20. Each call session 20 has associated with it various resource objects. Thus, each call has an associated call object. In this example, the call object 1 shown at 21 corresponds to the incoming call and call object 2 shown at 22 corresponds to the outgoing call. Each call object 21, 22 has an associated trunk leg 23, 24 which represents the connections to the voice network. To connect the two calls, an interconnection object referred to as a bridge 27 is used, to interconnect the respective voice streams of the two calls. To provide media access to one or both parts of a call, a media group leg provided shown at 27, 28 which provides access to a media group 29, 30. The media group 29, 30 provides access to a media function provided by the platform 10, in particular one of a recorder which records a voice stream to a media stream 17a, a player which reads a data file from the media store 17a and generates a voice stream, and a DTMF tone detector to detect DTMF tones. A media group 29, 30 may thus be connected to receive a voice stream from a trunk leg or send a voicestream to a trunk leg. In the example of the call control API of the Hewlett-Packard OpenCall Media Platform, for a media group to send a voice stream on to a truck leg 24, a bridge 26 must not be connected thereto.

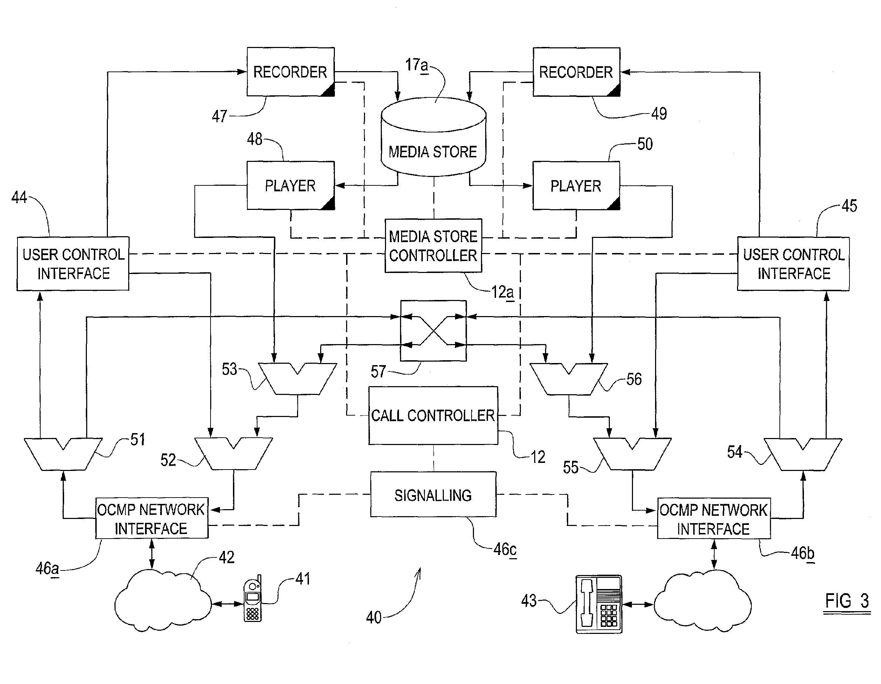

A mechanism for providing a telecommunication service embodying the present invention is generally illustrated at 40 in Figure 3. In Figure 3, voice stream connections are shown by solid lines and control data connections are shown by dashed lines.

A calling party is represented by a telephone 41 which makes a call through a telephone network 42. The call has an associated destination identifier, such as a telephone number, which identifies the caller's telephone 43. The call is routed to the telecommunication service platform 10 of Figure 1 In conventional manner, in response to the call being received a call session is established to handle the call and a service application 12 comprising a call controller is established and set in operation to handle the call. The call controller 12, via the signalling and network control parts of the telecommunication service platform 10, attempts to establish a outgoing call to the called party's telephone 43. The call controller 12 takes further steps to establish the call, such as establishing the calling party user control interface 44 and the called party user control interface 45. The connection between the network and the service platform 10 occurs at the network interfaces 46a, 46b and network signalling is handled by signalling controller 46c. The call controller 12 further initiates media resources comprising a recorder 47 to record a voice stream from the incoming call and a player 48 operable to play a voice stream to the incoming call. Similarly, media resources comprising a recorder 49 to record a voice stream from the outgoing call and a player 50 operable to play a voice stream to the outgoing call are initiated and the network resources associated with the call session.

The media resources 47, 48, 49, 50 and the user control interfaces 44, 45 may be controlled by the service application 12 via a media store controller 12a equivalent to a media group leg as shown in Figure 2. This permits prompts, messages or menus generated by the user control interfaces 44, 45 to be stored on and retrieved from the media store 17a thus permitting the messages to be easily changed and updated as desired.

To route the voice stream associated with the call session, splitters/mixers 51, 52, 53, 54, 55 and 56 are set up under the control of the call controller 12. The splitters/mixers 51, 52, 53, 54, 55 and 56 are operable to split voice streams, merge voice streams or select one from two alternative voice streams as required. To provide for full-duplex communication between the called party 43 and calling party 41 the service application 12 may establish an interconnect shown at 57, that is in the example of the HP OCMP a bridge 26, to connect the voice streams of the incoming and outgoing calls.

The splitters/mixers 51, 54 receive a voice stream from a call and are controllable to send the voice stream to one or both of the respective user control interface 44, 45 and the interconnect 57. Splitters/mixers 53, 56 are operable to receive voice streams from the interconnect 57 and the respective player 48, 50 and merge the streams or select one of the streams. The output stream from the splitter 53, 56 is passed to splitter 52, 55 which also receives a voice stream from the respective user control interface 44, 45 and either merges the streams or selects one of the streams and passes a voice stream to the OCMP network interface 46a, 46b for onward transmission as part of the respective call. The user control interface 44, 45 is operable to pass the voice stream to the respective recorder 47, 49.

The media resources may be controlled by the called or calling parties as appropriate via the respective user control interface 44, 45, for example by detecting DTMF tones or by voice recognition, in response to audio menus or by being detected in the voice stream received from the controlling party. The user control interfaces 44, 45 may be implemented using VXML for example.

With this configuration, it will be apparent that the voice stream corresponding to each call is directed to a recorder and stored in a data file in the media store 17a from where it is read by a player associated with the other call which generates a voice stream accordingly, and so any kind of mediated communication between the parties to the call may be provided as desired. Voice streams could be modified as desired, for example one party could ask the system to slow the voice stream received from the other party for easier comprehension. One party could pause, rewind or fast forward through the recorded voice stream from the other party even while the call is in progress to review the call, and possibly make the recording available to the other party from the media store 17a. Processing may be performed on the recorded call as desired, such as applying noise reduction or modifying a recorded voice stream to disguise it or make the voice sound like another person. If a party has to temporarily leave a call, particularly a conference call, the party could cause the recorder to record the call and the appropriate user control interface may play a message confirming the chosen operation. It will be apparent that any conversation would be recorded in the media store 17a, such that it could, for example, be reviewed by the called party after completion of the call.

As an example of a more complex service which may be provided by such a system, a common and popular service provided to users of telecommunication systems is that of voicemail. Conventionally, when a caller attempts to call a particular number and the corresponding called party does not answer, or is unavailable, the call is passed to a voicemail service where the calling party may leave a message. The called party is then notified of the existence of a message, for example by means of a text or voice message being transmitted to the called party's telephone, particularly where the telephone comprises a mobile telephone for a cellular radio telephone network. In the case of the "1571" service provided by British Telecom or the "Top Message" service provided by France Telecom, the called party is notified of the presence of messages by a modified dialling tone being set to their landline telephone. In either case, the called party will not be made aware that a message is being left immediately, and may not become aware of the message for some time.

Conventionally, such voicemail is accomplished by means of a redirection step at the network level. The network will attempt to establish a call leg to the required call destination, and when this call leg is not established, either through no answer being received or the call destination being unavailable or the call destination having been set to divert calls to voicemail, that leg is dropped and a leg established to a platform providing the voicemail service. No notification is provided to the called party until the call to the voicemail service is complete and indeed there is no call leg to the call party, so there is no means of performing call screening, that is listening to an incoming call and deciding whether or not to accept the call as may be performed with a conventional answering machine.

In this example, an immediate notification is sent to the called party and the called party is given the option to listen to the message while it is being left, to listen to the message from the start or indeed establish a full call with the calling party.

As above, the calling party 41 makes a call through a telephone network 42 to a called party 43, identified by an associated destination identifier, such as a telephone number. The call is routed to the telecommunication service platform 10 of Figure 1, for example because the called party 43 has set an instruction to direct calls to a voice mail service. On the platform 10, the user control interface 44 provides an appropriate interface to provide access to a voicemail application, such as an appropriate message and a prompt to leave a message. The voice stream in response to the prompt is directed to the recorder 47 which saves the voice stream on a data file in the media store 17a.

In parallel, the call controller 12, via the signalling and network control parts of the telecommunication service platform 10, attempts to establish a outgoing call to the called party's telephone 43. If the outgoing call is answered by the called party, the outgoing call user control interface 45 is operable to play an announcement, for example generate an appropriate voice stream, which is passed to the outgoing call via the splitter/mixer 53. The voice stream may for example include a menu to which the called party may respond by pressing the keys of the telephone 43 to generate DTMF tones or by voice recognition or otherwise as desired.

In the present example, the called party using the telephone 43 may elect to do one of the following;
listen to the message recorded so far,
listen to the message being left, or
establish a full connection with the calling party.

Where the call party elects to listen to the message recorded so far, the call controller 12 will associate the player 50 with the outgoing leg of the call, and cause the player 50 to read the data file stored in the media store 17a by the recorder 47 and generate an appropriate voice stream. The voice stream will be passed by the splitter/mixers 55, 56 and network interface 46b to the outgoing call. With reference to the diagram of Figure 2, it is possible to "play" a voice stream to the trunk leg of the outgoing call because there is no bridge 26 connecting the incoming call and outgoing call.

Where the called party elects to listen to the message while it is being recorded, the service application 12 may establish the interconnect shown at 57, that is in the example of the HP Opencall Media Platform bridge 26, to connect the voice stream from the splitter 51 to be passed to the splitter/mixer 56, splitter/mixer 55 and hence passed to the outgoing call. The service application 12 may prevent a voice stream from the outgoing call being passed to the incoming call by, for example controlling the interconnect 57 or splitter 56 as appropriate.

Finally, where the called party requests to be connected to the calling party, the service application 12 will establish a full interconnect 57 equivalent to the bridge 26 such that full duplex communication between the calling party 41 and the called party 43 is established. Where a full connection between the incoming call and outgoing call is requested, the incoming call may still be recorded via the user control interface 44 and recorder 47.

It will be apparent that the voice mail application requires fewer system resources than the general-purpose configuration as shown in Figure 3, and it will be apparent that resources can be allocated to a call session in accordance with the purpose and requirements of the call.

The example of this invention described herein is particularly suitable for use with telecommunication service platforms such as the Hewlett-Packard OpenCall Media Platform, but it will be apparent that such a method may be implemented as desired in any other appropriate manner. It will be apparent that the method and application will be suitable for use with any type of network, whether landline or a cellular radio telecommunication network or otherwise and thus a consistent voice mail service may be provided to both users on mobile telephones and landline telephones.

In the present specification "comprises" means "includes or consists of" and "comprising" means "including or consisting of".

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A method of providing a mediated communication service comprising the steps of
receiving an incoming call from a calling party, the incoming call comprising a destination identifier,
establishing a call session corresponding to the incoming call,
establishing an outgoing call to a called party in accordance with the destination identifier, the outgoing call being associated with the call session, and
associating media resources comprising a recorder and a player with the call session, the recorder being operable to store a voice stream from one of the incoming call and the outgoing call in a media store and the player being operable to read the media store and generate a voice stream which is passed to the other of the incoming call and the outgoing call.

2. A method according to claim 1 comprising passing a voice stream from one of the outgoing call and the incoming call to an interconnect to pass the voice stream to the other of the outgoing call and the incoming call.

3. A method according to claim 2 comprising receiving one or more of a voice stream from the player and the voice stream from the interconnect and selecting one of the voice streams to pass to the other of the outgoing call and the incoming call.

4. A method according to any one of the preceding claims comprising generating an audio message and passing it to one of the outgoing call and the incoming call.

5. A method according to any one of the preceding claims comprising receiving a control instruction from one of the called party and the calling party to modify operation of at least one of the media resources associated with the call session.

6. A method according to claim 5 wherein the control instruction from the one of the called party and the calling party is to perform one of the following actions;
receive a voice stream from the player;
receive a voice stream from the other call;
modify the voice stream received from the player;
start or stop operation of the recorder;
modify the voice stream recorded by the recorder;
send an audio message to the other party.

7. A method according to any one of the preceding claims comprising associating media resources comprising a player and a recorder with each call of a call session, the media resources associated with each call being controllable by the party associated with the call.

8. A method of providing a mediated communication service comprising a voice mail service, the service comprising the steps of
receiving an incoming call from a calling party, the incoming call comprising a destination identifier,
establishing a call session corresponding to the incoming call,
establishing an outgoing call to a called party in accordance with the destination identifier, the outgoing call being associated with the call session, and
associating a media resource comprising a recorder with the call session, the recorder being operable to store a voice stream from the incoming call in a media store,
the method further comprising the step of passing an audio message to said outgoing call notifying the called party that a message is being recorded.

9. A method according to claim 8 comprising the step of associating a further media resource with the call session, the further media resource comprising a player, whereby the player may read the media store and generate a voice stream which is passed to the outgoing call.

10. A method according to claim 9 wherein the outgoing call is operable to receive a voice stream from the incoming call from the player.

11. A method according to claim 10 comprising the step of receiving an instruction from the call party to perform one of the following actions;
receive a voice stream from the further media resource,
receive a voice stream from the incoming call,
establish a connection between the incoming call and the outgoing call.

12. A method according to claim 11 comprising the step of connecting the incoming call to the outgoing call in response to an instruction from the called party.

13. A method according to claim 11 or claim 12 comprising the step of generating a control message comprising an audio message and passing the message to the outgoing call and receiving the instructions in response to said message.

14. A service application for a telecommunication service platform, the service application being operable to perform a method according to any one of claims 1 to 7 or claims 8 to 13.
